# EUROPÄISCHE PATENTSCHRIFT

(11) **EP 2 267 416 B1**
(45) Veröffentlichungstag und Bekanntmachung des Hinweises auf die Patenterteilung: **20.05.2015**
(21) Anmeldenummer: 09008344.5
(22) Anmeldetag: 25.06.2009
(51) Int. Cl.: G01F 1/66

(54) **Durchflussmengenmesseinrichtung für fluide Medien mit Strömungsgleichrichter**
Flow rate measuring apparatus for fluid media with flow rectifier
Dispositif de mesure de quantité de débit pour milieux fluides doté d'un redresseur de courant

(43) Veröffentlichungstag der Anmeldung: 29.12.2010
(73) Patentinhaber: QUNDIS GmbH, 99098 Erfurt (DE)
(72) Erfinder: Neumann, Kai, 23560 Lübeck (DE); Körner, Hans-Holger, 23758 Oldenburg (DE)
(74) Vertreter: Liedtke, Markus

(56) Entgegenhaltungen:
- EP-A- 1 065 474
- EP-A- 1 775 560
- EP-A- 1 798 528
- EP-A- 1 995 570
- DE-A1-102004 053 860
- US-A1- 2006 288 798

## Beschreibung

Die Erfindung betrifft eine Durchflussmengenmesseinrichtung für fluide Medien, insbesondere in Wärmezählern.

Aus der EP 1 798 528 A1 ist eine Durchflussmengenmesseinrichtung für fluide Medien bekannt, bei der zur Durchflussmengenmessung Ultraschallwellen verwendet werden. Die Ultraschallwellen werden mit Hilfe von Umlenkspiegeln durch ein Messrohr, welches eine Messstrecke definiert geleitet. Durch Messung der Laufzeit der Ultraschallwellen entlang der Messstrecke können die Durchflussgeschwindigkeit und daraus die Durchflussmenge des Fluids durch die Durchflussmengenmesseinrichtung bestimmt werden. Das zu messende Fluid wird dabei innerhalb der Durchflussmengenmesseinrichtung nicht umgelenkt, sondern behält vielmehr seine Strömungsrichtung bei, d.h. es fließt in der gesamten Durchflussmengenmesseinrichtung im Wesentlichen parallel zur Achse des Messrohrs.

Das Fluid umströmt die Umlenkspiegel der Durchflussmengenmesseinrichtung, wobei es bei hohen Strömungsgeschwindigkeiten - bei Wärmezählern bis zu 10 m/s - aufgrund des Strömungsdruckes zu Positionsabweichungen der Umlenkspiegel kommen kann. Dadurch kann das Messergebnis verfälscht werden. Positionsabweichungen können insbesondere dann auftreten, wenn für eine bessere Reparaturfähigkeit der Durchflussmengenmesseinrichtung die Umlenkspiegel lösbar in der Durchflussmengenmesseinrichtung befestigt sind.

Die europäische Messgeräterichtlinie (MID; Richtlinie 2004/22/EG) schreibt für das Zulassungsverfahren für Durchflussmengenmesseinrichtungen von Wärmezählern Prüfungen mit definiert gestörten Einlaufströmungen vor, wie z.B. dem clockwise swirl. Findet innerhalb eines Messgerätes keine grundsätzliche Umlenkung der Strömung statt, bleibt das gestörte Strömungsprofil auch in der Messstrecke erhalten. Ein gestörtes Strömungsprofil innerhalb einer Messstrecke verfälscht jedoch das Messergebnis. Bei einer Durchflussmengenmesseinrichtung gemäß der EP 1 798 528 A1 kann so die durch die europäische Messgeräterichtlinie vorgeschriebenen Messtoleranzen bei gestörter Einlaufströmungen nicht erreicht werden.

Der Erfindung liegt die Aufgabe zugrunde, eine Durchflussmengenmesseinrichtung zu schaffen, die reparaturfähig ist und sowohl bei hohen Strömungsgeschwindigkeiten als auch bei gestörten Strömungsprofilen eine ausreichende Messgenauigkeit bietet.

Ausgehend vom eingangs genannten Stand der Technik wird diese Aufgabe durch eine Durchflussmengenmesseinrichtung gemäß dem Hauptanspruch gelöst. Vorteilhafte Ausführungsformen ergeben sich aus den abhängigen Ansprüchen.

Demnach betrifft die Erfindung eine Durchflussmengenmesseinrichtung für fluide Medien mit einem Gehäuse, dessen Innenraum durch eine Gehäuseinnenwand begrenzt ist, einem innerhalb des Gehäuses angeordneten Messrohr, das eine Messstrecke für eine Laufzeitmessung bestimmt, und eine Ultraschallmesseinrichtung umfassend mindestens einen Ultraschallwandler zur Abstrahlung von Ultraschallwellen in den Innenraum, mindestens einen Umlenkspiegel an der Messstrecke, mittels der die Ultraschallwellen des Ultraschallwandlers in die Messstrecke umgelenkt werden, wobei der Umlenkspiegel an einem Tragarm befestigt und der Tragarm an seinem Einsteckende zum Einstecken in einen Zwischenraum zwischen dem Messrohr und der Gehäuseinnenwand ausgebildet ist, bei der der Tragarm an seinem dem Einsteckende entgegengesetzten Ende ein elastisches Federelement zur lösbaren Fixierung des Tragarms an der Gehäuseinnenwand aufweist, wobei der Umlenkspiegel zwischen Einsteckende und Federelement angeordnet ist und sich das Federelement an dem dem Tragarm gegenüberliegenden Teil der Gehäuseinnenwand abstützt und das Federelement Leitflächen zur Strömungsgleichrichtung aufweist.

"Gegenüberliegend" in diesem Zusammenhang bedeutet, dass sich das Federelement so abstützen kann, dass der Tragarm durch das Federelement gegen die Gehäuseinnenwand gedrückt wird. Indem sich das Federelement an dem dem Tragarm gegenüberliegenden Teil der Gehäuseinnenwand abstützt, wird der Tragarm selbst gegen die Gehäuseinnenwand gedrückt und so an seinem dem Einsteckende gegenüberliegenden Ende fixiert.

Mit seinem Einsteckende ist der Tragarm in einem Zwischenraum zwischen dem Messrohr und der Gehäuseinnenwand gehaltert. Der Umlenkspiegel ist erfindungsgemäß zwischen dem Einsteckende und dem Federelement am Tragarm befestigt.

Der Umlenkspiegel ist in Richtung des Tragarms also zu beiden Seiten gesichert: am Einsteckende durch die Halterung zwischen Messrohr und Gehäuseinnenwand, am anderen Ende durch das Federelement. Durch diese zweifache Fixierung kann sichergestellt werden, dass der Umlenkspiegel auch bei hohen Strömungsgeschwindigkeiten seine Position nicht verändert und somit das Messergebnis nicht verfälscht wird. Besonders ein "Anheben" des Tragarms samt Umlenkspiegel von der Gehäuseinnenwand aufgrund des Strömungsdruckes wird verhindert.

Durch das Vorsehen des elastischen Federelements zur lösbaren Fixierung des Tragarms wird die Reparaturfähigkeit der Durchflussmengenmesseinrichtung gegenüber der im Stand der Technik Bekannten nicht eingeschränkt. Das Federelement lässt sich aufgrund seiner elastischen Eigenschaften nämlich so verformen, dass es sich nicht mehr an der dem Tragarm gegenüberliegenden Seite der Gehäuseinnenwand abstützt. Die Fixierung durch das Federelement wird somit aufgehoben und der Tragarm kann in bekannter Weise aus dem Gehäuse entfernt bzw. wieder eingesetzt werden. Beispielsweise kann der Tragarm entlang der Achse des Messrohrs durch die Einlass- oder Auslassöffnung der Durchflussmengenmesseinrichtung gezogen werden. Bei der Auslegung des Federelements ist jedoch darauf zu achten, dass die Fixierwirkung des Federelements nicht allein durch den Strömungsdruck aufgrund der Fluidströmung aufgehoben wird.

Erfindungsgemäß ist weiterhin vorgesehen, dass das Federelement Leitflächen zur Strömungsgleichrichtung aufweist. Mit diesen Leitflächen kann ein gestörtes Strömungsprofil - wie z.B. ein clockwise swirl - beseitigt werden. Die Messgenauigkeit der Durchflussmengenmesseinrichtung bei gestörtem Einlaufprofil kann so deutlich erhöht werden. Dabei können die Leitflächen durch die, die Fixierwirkung des Federelements bewirkenden Teile gebildet werden. Es ist aber auch möglich, dass an die vorgenannten Teile zusätzliche Leitelemente, die (ggf. zusätzliche) Leitflächen bilden, befestigt werden.

Indem das Federelement Leitflächen aufweist, wird eine Strömungsgleichrichtung erreicht, ohne dass ein zusätzliches, separates Strömungsgleichrichterbauteil erforderlich wäre. Da das Federelement fest mit dem Tragarm verbunden ist, wird außerdem sichergestellt, dass sich die Leitflächen nach der Montage immer in einer festgelegten Position gegenüber dem Umlenkspiegel befinden. Sie sind somit drehfest und abstandsbestimmt gegenüber dem Umlenkspiegel. Maßnahmen, die zur Ausrichtung von Leitflächen in einem zusätzlichen Bauteil notwendig wären, sind erfindungsgemäß also nicht erforderlich.

Es ist bevorzugt, dass Federelement wenigstens einen flächigen Federschenkel aufweist, der an dem Tragarm befestigt ist, wobei die Flächennormale des Federschenkels vorzugsweise im Wesentlichen senkrecht zur Achse des Messrohrs steht. Durch einen solchen flächigen Federschenkel kann eine Leitfläche gebildet werden. Dabei ist nicht erforderlich, dass der Federschenkel gradlinig verläuft, vielmehr ist es auch möglich, dass er abgewinkelt ist, wobei vorzugsweise die Flächennormalen der Teilflächen senkrecht zur Achse des Messrohrs stehen.

Weiter bevorzugt ist es, dass das Federelement zwei flächige Federschenkel aufweist, die vorzugsweise an je einer der Längskanten des Tragarms befestigt sind, wobei die zweiflächigen Federschenkel die Form eines in seiner Mitte auseinander gezogenen X-förmigen Profils bilden.

Es ist bevorzugt, wenn der Tragarm und/oder die Federschenkel aus federelastischem Material gefertigt sind. Weiter bevorzugt ist es, wenn Tragarm und Federschenkel einstückig ausgebildet sind. Durch die einstückige Ausbildung von Tragarm und Federschenkel kann die Herstellung vereinfacht und die Kosten reduziert werden.

Die Positionierung des Tragarms innerhalb des Gehäuses kann durch eine Führung an der Gehäuseinnenwand und/oder der Außenwand des Messrohrs erreicht werden. Eine solche Führung kann bspw. in Form einer Nut gegeben sein. Die Nut bildet dann den Zwischenraum, in der der Tragarm zwischen Gehäuseinnenwand und Messrohr gehaltert ist.

Es ist bevorzugt, wenn an der der Gehäuseinnenwand zugewandten Seite des Tragarms ein Zapfen vorgesehen ist, der in eine in der Gehäuseinnenwand vorgesehenen Vertiefung eingreifen kann. Durch entsprechende Kombination aus Zapfen und Vertiefung kann eine genaue Positionierung des Tragarms - und damit auch des Umlenkspiegels - im Inneren des Gehäuses erreicht werden. Dies ist der Genauigkeit der Messung zuträglich. Das Federelement muss sich während der Montage bzw. Demontage des Tragarms dann soweit verformen oder kippen lassen, dass der Zapfen aus dem Eingriff mit der Vertiefung gelöst werden kann.

Der Zapfen kann am Tragarm angeformt sein. Es ist aber möglich, dass der Zapfen einstückig mit dem Umlenkspiegel ausgebildet und am Tragarm eine selbstsichernde Durchstecköffnung vorgesehen ist. Selbstsichernd bedeutet, dass sich der Zapfen, sofern er einmal in die Durchstecköffnung eingeführt wurde, nicht ohne weiteres wieder aus ihr entfernen lässt. Dies lässt sich bspw. durch das Vorsehen von Rastelementen erreichen. Wird der Umlenkspiegel dann am Tragarm befestigt, ragt der Zapfen am Umlenkspiegel durch die Durchstecköffnung des Tragarms hindurch und bildet den für die Positionierung des Tragarms erforderlichen Zapfen.

Wenn Durchflussmengenmesseinrichtungen in Wärmezählern zum Einsatz kommen, ist in der Regel noch ein Temperaturmessfühler vorgesehen. Zur Sicherstellung der ordnungsgemäßen Positionierung des Tragarms und damit des Umlenkspiegels, die für eine hohe Messgenauigkeit erforderlich sind, kann vorgesehen sein, dass im Gehäuse sowie im Tragarm je eine Durchstecköffnung für einen Temperaturmessfühler vorgesehen ist, die bei ordnungsgemäßer Positionierung des Tragarms im Gehäuse fluchten. Indem die Durchstecköffnungen nur bei ordnungsgemäßer Positionierung fluchten, wird sichergestellt; dass der Temperaturmessfühler nur dann eingesetzt werden kann, wenn beide Tragarme und das Messrohr in der jeweils richtigen Position, d.h. fehlerfrei, montiert ist.

Es ist auch möglich, dass die Tragarme und das Messrohr erst durch das Einsetzen eines Temperaturmessfühlers in ihrer Position fixiert werden. Sind die Durchstecköffnungen am Gehäuse und dem Tragarm passgenau auf die Form des Temperaturmessfühlers abgestimmt, wird bei eingestecktem Temperaturmessfühler eine genaue Positionierung wenigstens eines Tragarms sichergestellt.

Es ist bevorzugt, wenn der wenigstens eine Tragarm und das Messrohr lösbar - z.B. durch Rastverbindungen - miteinander verbunden werden. Ein weiterer Tragarm kann lösbar mit dem Messrohr verbunden sein. Indem das Messrohr und/oder der weitere Tragarm mit dem genau positionierten Tragarm verbunden werden, werden sie ebenfalls genau positioniert.

Es ist bevorzugt, wenn sich die Tragarme und das Messrohr zu einer Einheit zusammensetzen lassen, bevor die Einheit in das Gehäuse eingeführt wird. Dazu können am Messrohr Zapfen vorgesehen sein, die in Durchstecköffnungen an den Tragarmen eingreifen. Werden Messrohr und Tragarme als Einheit durch die Ein- bzw. Auslassöffnung in das Gehäuse eingeführt, ist bevorzugt im Bereich der Aus- bzw. Einlassöffnung ein Anschlag vorgesehen sein. Durch diesen Anschlag dann die genaue Positionierung der Einheit weiter verbessert werden.

Die Erfindung wird nun anhand einer vorteilhaften Ausführungsform unter Bezugnahme auf die beigefügten Zeichnungen beispielhaft beschrieben. Es zeigen:
- Fig. 1: den Schnitt durch eine erste erfindungsgemäße Durchflussmengenmesseinrichtung;
- Fig. 2a-c: schematische Darstellung der Montage der Durchflussmengenmesseinrichtung aus Fig. 1;
- Fig. 3a, b: Seitenansichten der Durchflussmengenmessein-richtung gemäß Figur 2c;
- Fig. 4: den Schnitt durch eine zweite erfindungsgemäße Durchflussmengenmesseinrichtung; und
- Fig. 5: eine Seitenansicht der Durchflussmengenmessein- richtung aus Fig. 4.

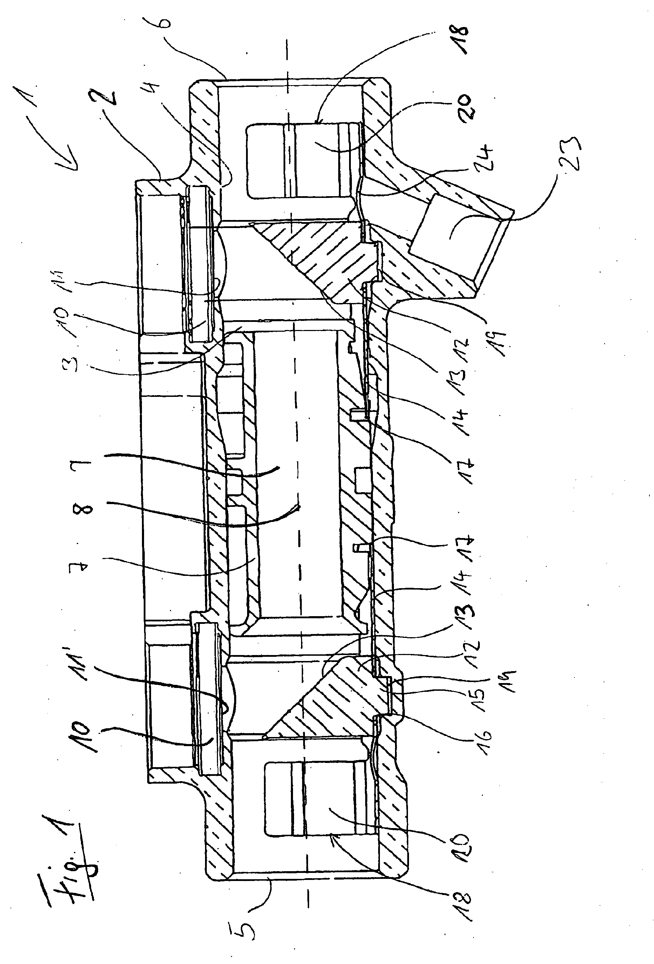

In Figur 1 ist ein erstes Ausführungsbeispiel einer erfindungsgemäßen Durchflussmengenmesseinrichtung 1 dargestellt. Die Durchflussmengenmesseinrichtung 1 umfasst ein Gehäuse 2, dessen Innenraum 3 durch die Gehäuseinnenwand 4 begrenzt ist. Das Gehäuse 2 weist eine Einlass- 5 und eine Auslassöffnung 6 auf. Innerhalb des Gehäuses 2 ist ein Messrohr 7 angeordnet, das entlang seiner Achse 8 eine Messstrecke 9 für eine Laufzeitmessung bestimmt. Die Einlass- 5 und Auslassöffnung 6 liegen auf der Achse 8 des Messrohrs 7. Das durch die Durchflussmengenmesseinrichtung 1 strömende Fluid wird nicht umgelenkt und fließt im Wesentlichen entlang der Achse 8. Das Messrohr 7 liegt dabei dicht an der Gehäuseinnenwand 4, so dass das gesamte Fluid durch das Messrohr 7 und entlang der Messtrecke 9 strömt. Um dies Sicherzustellen kann ein Dichtungsring (nicht dargestellt) zwischen Messrohr 7 und Gehäuseinnenwand 4 vorgesehen sein.

Die Durchflussmengenmesseinrichtung 1 umfasst weiterhin zwei Ultraschallwandler 10, die so am Gehäuse befestigt sind, dass sie mit ihrer schallabstrahlenden oder empfangenden Flächen 11 die Gehäuseinnenwand 4 durchbrechen. Die Ultraschallwandler 10 sind dadurch in der Lage, Ultraschallwellen in den Innenraum 3 des Gehäuses 2 zu emittieren bzw. Ultraschallwellen aus dem Innenraum 3 des Gehäuses 2 zu detektieren.

Die Ultraschallwellen des einen Ultraschallwandlers 10 werden über die Vorderseite 13 eines Umlenkspiegels 12 so umgelenkt, dass sie entlang der Messstrecke 7 verlaufen, bevor sie von der Vorderseite 13 eines weiteren Umlenkspiegels 12 in Richtung des anderen Ultraschallwandlers 10 umgelenkt und dort detektiert werden. Über die Messung der Laufzeit der einzelnen Ultraschallwellen entlang des festgelegten Weges lässt sich die Durchflussgeschwindigkeit und darüber die Durchflussmenge ermitteln.

Die Umlenkspiegel 12 sind auf Tragarmen 14 befestigt. Die Umlenkspiegel 12 weisen dafür je einen Zapfen 15 auf, der in einer selbstsichernden Durchstecköffnung 16 im Tragarm 14 gehalten wird. Die Umlenkspiegel 12 ist dabei vorzugsweise aus einem keramischen Material gefertigt, welches gute Reflektionseigenschaften aufweist und korrosionsbeständig ist.

Eine genaue Positionierung der Umlenkspiegel 12 innerhalb des Gehäuses wird erreicht, indem der Zapfen 15 eines Umlenkspiegels 12, der durch die selbstsichernde Durchstecköffnung 16 des Tragarms 14 ragt in Eingriff mit einer Vertiefung 19 gebracht wird. Die Vertiefung 19 ist dabei vorzugsweise passgenau zum Zapfen 15. So wird verhindert, dass sich der Zapfen 15 in der Vertiefung 19 bewegen kann.

Der Tragarm 14 ist aus federelastischem Material gefertigt und verläuft im Wesentlichen parallel zur Achse 8 des Messrohres 7. Mit seinem Einsteckende 17 ist der Tragarm 14 zwischen Gehäuseinnenwand 4 und Messrohr 7 gehaltert. An seinem gegenüberliegenden Ende ist ein Federelement 18 vorgesehen, welches den Tragarm 14 gegen die Gehäuseinnenwand 4 drückt, indem es sich gegen den dem Tragarm 14 gegenüberliegenden Teil der Gehäuseinnenwand 4 abstützt. Der Umlenkspiegel 12 ist zwischen Einsteckende 17 und Federelement 18 angeordnet. Indem der Umlenkspiegel 12 in Richtung des Tragarms 14 beidseitig fixiert ist, behält er auch bei hohen Strömungsgeschwindigkeiten seine Position bei. Messungenauigkeiten können so vermieden werden.

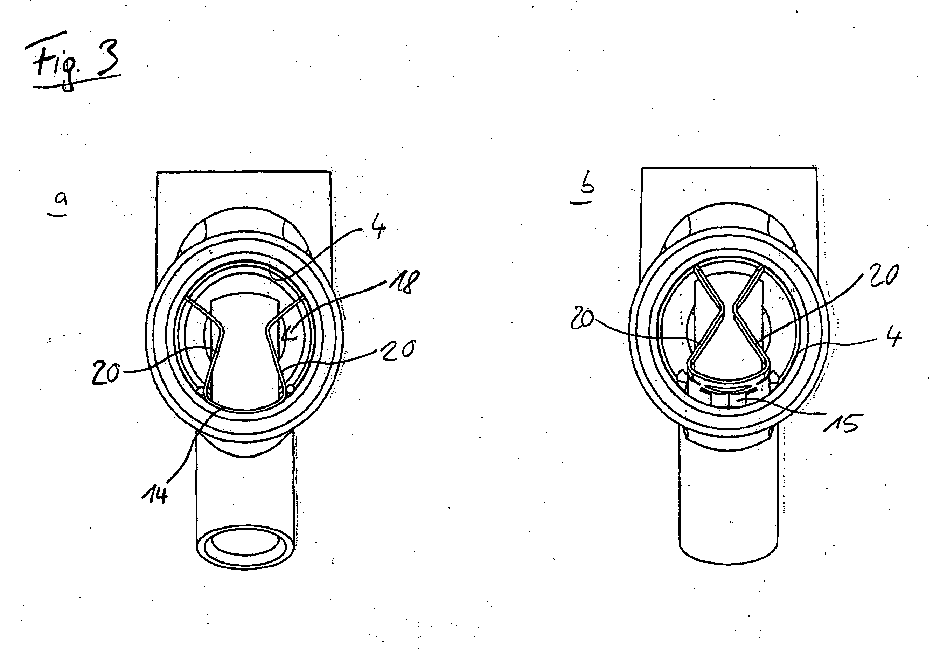

Das Federelement 18 umfasst flächige Federschenkel 20, bei denen die Flächennormalen der einzelnen Flächenabschnitte senkrecht zur Achse des Messrohrs 8 angeordnet sind (vgl. auch Fig. 3a). Die Federschenkel 20 bilden dadurch Leitflächen zu Strömungsgleichrichtung.

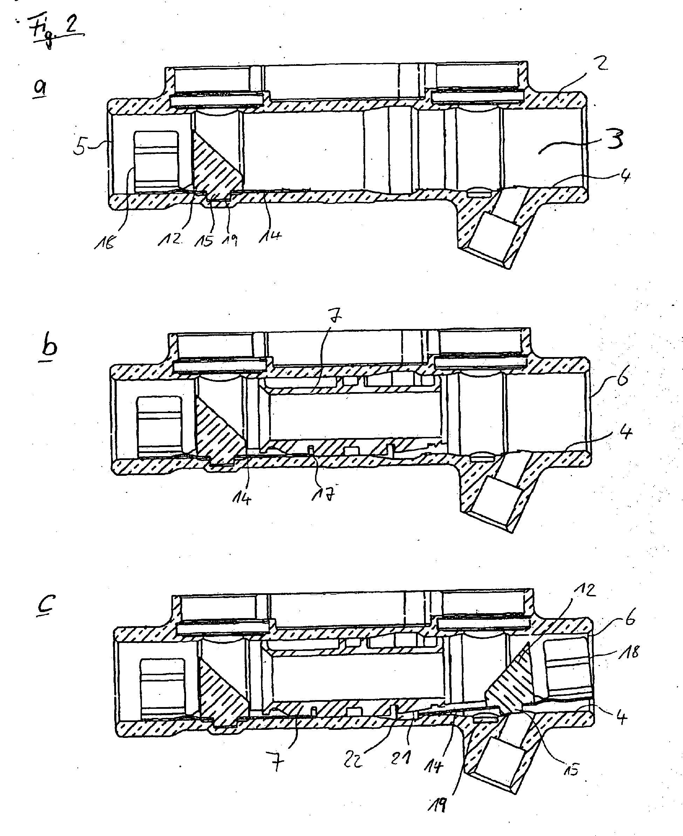

In den Figuren 2 a-c ist die Montage des erfindungsgemäßen Durchflussmengenmesseinrichtung 1, wie in Fig. 1 dargestellt, schematisch aufgezeigt.

In einem Gehäuse 2 mit dem Innenraum 3 wird zunächst auf der Seite der Einlassöffnung 5 ein Tragarm 14 mit Umlenkspiegel 12 eingesetzt (Fig. 2a). Die Position des Umlenkspiegel 12 bzw. Tragarm 14 ist durch den Eingriff des Zapfens 15 in die Vertiefung 19 in der Gehäuseinnenwand 4 definiert. Über das Federelement 18 wird der Tragarm 14 mit dem Umlenkspiegel 12 in dieser Position fixiert.

In einem zweiten Schritt (Fig. 2b) wird das Messrohr 7 durch die Ausflussöffnung 6 eingeschoben, bis das Einsteckende 17 des bereits eingesetzten Tragarms 14 an einem Anschlag des Messrohrs 7 zu liegen kommt. Das Einsteckende 17 des bereits eingesetzten Tragarms 14 befindet sich nun in einem Zwischenraum zwischen Messrohr 7 und Gehäuseinnenwand 6.

Abschließend wird der zweite Tragarm 14 mit dem zweiten Umlenkspiegel 12 durch die Ausflussöffnung 6 eingeführt (Fig. 2c). Das Federelement 18 muss dabei soweit verformt werden, dass das dargestellte Verkippen des Tragarms 14 möglich ist. Das Verkippen muss es erlauben, den Tragarm 14 soweit in das Gehäuse 2 einzuführen, dass der Zapfen 15 mit Vertiefung 19 in Eingriff gelangen kann. Sobald der Eingriff des Zapfen 15 in die Vertiefung 19 erfolgt, ergibt sich die Durchflussmengenmesseinrichtung 1, wie in Fig. 1 dargestellt.

In der dargestellten Ausführungsform sind das Messrohr 7 und die Gehäuseinnenwand 4 so geformt, dass ein Verkippen des Tragarms 14 möglich ist. Dazu weist das Messrohr 7 an seiner der Ausflussöffnung 6 zugewandten Seite eine abgeschrägte Fläche 21 auf und in der Gehäuseinnenwand 3 ist eine Ausweichvertiefung 22 vorgesehen. Der Tragarm 14 lässt sich dadurch ausreichend verkippen. Sobald der Zapfen 15 mit der Vertiefung 19 in Eingriff kommt, liegt der Tragarm 14 sowohl an dem Messrohr 7 als auch an der Gehäuseinnenwand 4 an und wird somit an seinem Einsteckende 17 gehalten.

Alternativ ist es möglich, den Tragarm 20 elastisch verformbar zu gestalten, so dass die dargestellte abgeschrägte Fläche 21 am Messrohrs 6 sowie die Ausweichvertiefung 22 in der Gehäuseinnenwand 3 nicht benötigt werden. Der Eingriff des Zapfens 15 in die Vertiefung 19 kann dann allein durch elastische Verformung des Tragarms 14 aufgehoben werden.

Am Gehäuse 2 ist weiterhin eine Durchstecköffnung 23 für einen Temperaturfühler (nicht dargestellt) vorgesehen. Auch am Tragarm 14 ist eine solche Durchstecköffnung 24 vorgesehen. Die beiden Durchstecköffnungen 23, 24 fluchten nur in dem Fall, dass der entsprechende Tragarm 14 ordnungsgemäß positioniert wurde. Ist dies nicht der Fall, fluchten die Durchstecköffnungen 23, 24 nicht und der Temperaturmessfühler kann nicht montiert werden. Indem die Montage nur bei ordnungsgemäß positioniertem Tragarm 14 abgeschlossen werden kann, werden systematische Messfehler durch fehlerhafte Montage nahezu ausgeschlossen.

In Figur 3a, b sind die Seitenansichten der Durchflussmengenmesseinrichtung gemäß Figur 2c dargestellt. Figur 3a zeigt dabei die Seite der Durchflussmengenmesseinrichtung 1 mit der Einlassöffnung 5, während Figur 3b die Seite mit Auslassöffnung 6 zeigt.

Das Federelement 18 umfasst zwei Federschenkel 20, die zusammen ein auseinander gezogenes X-förmiges Profil bilden. Sie stützen sich gegen die dem Tragarm 14 gegenüberliegende Seite der Gehäuseinnenwand 4 ab und drücken somit den Tragarm 14 gegen die Gehäuseinnenwand 4. Die Federschenkel 20 sind einstückig mit dem Tragarm 14 gebildet und an den Längsseiten des Tragarms 14 angeordnet. Die Federschenkel 20 sind flächig ausgeführt, wobei die Flächennormalen der einzelnen Teilflächen der Federschenkel 20 senkrecht zur Achse 8 des Messrohrs 7 stehen. Die Federschenkel 20 dienen somit als Leitflächen zur Strömungsberuhigung.

Zur Montage bzw. Demontage können die beiden Federschenkel 20 eines Federelementes 18 zusammen gedrückt werden, so dass sie nicht mehr an der Gehäuseinnenwand 3 anliegen und ein Freiraum zwischen Federschenkel 20 und Gehäuseinnenwand 4 entsteht. Dann kann der Tragarm 18 soweit angehoben werden, bis sich der Zapfen 15 nicht mehr in Eingriff mit der Vertiefung 19 in der Gehäuseinnenwand 4 befindet (vgl. Fig. 3b). Der Tragarm 14 kann dann zusammen mit dem Umlenkspiegel 12 aus dem Gehäuse 2 entfernt bzw. in dieses eingesetzt werden.

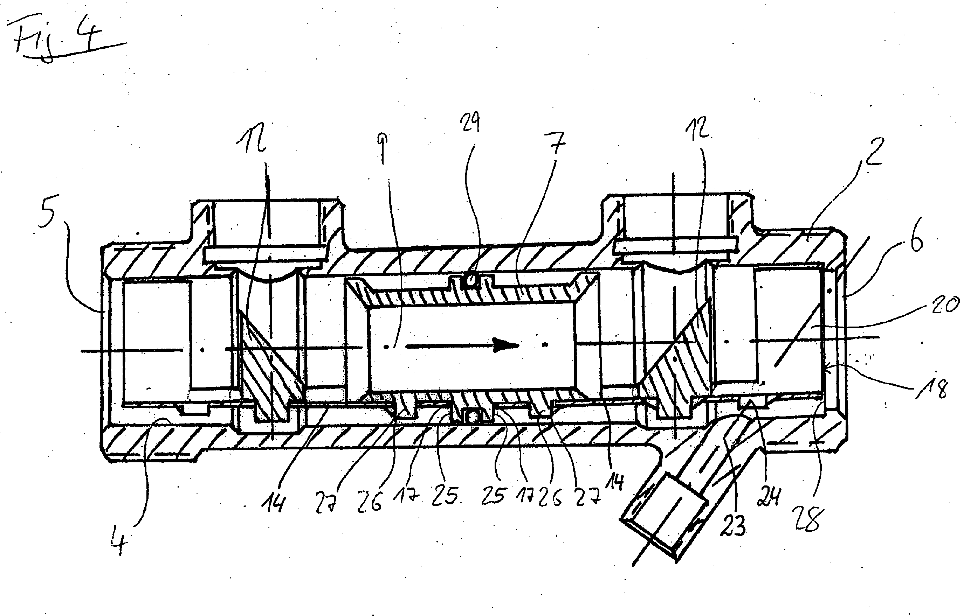

In Fig. 4 ist der Schnitt durch ein zweites Ausführungsbeispiel einer erfindungsgemäßen Durchflussmengenmesseinrichtung 1 gezeigt. In weiten Teilen entspricht dieses Ausführungsbeispiel dem ersten Ausführungsbeispiel aus Figuren 1 bis 3b, weshalb auf die diesbezüglichen Erläuterungen verwiesen wird. Im Gegensatz zu dem ersten Ausführungsbeispiel aus Figuren 1 bis 3b werden die Tragarme 14 mit dem Umlenkspiegeln 12 bei dem zweiten Ausführungsbeispiel jedoch nicht durch den Eingriff von Zapfen 15 in Vertiefungen 19 in der Gehäuseinnenwand 4 in ihrer Position gesichert (vgl. Figuren 1 bis 3c).

Im zweiten Ausführungsbeispiel weist das Messrohr 7 an seiner Außenseite Anschläge 25 und Zapfen 26 auf. Die Tragarme 14 kommen mit ihrem jeweiligen Einsteckende 17 am Anschlag zu liegen, während der Zapfen 26 in Durchstecköffnungen 27 an den Tragarmen 14 eingreift. Die Tragarme 14 sind durch diese Verbindung drehfest und abstandsbestimmt mit dem Messrohr 7 verbunden.

Tragarme 14 und Messrohr 7 werden als Einheit durch die Einlassöffnung 5 in das Gehäuse 2 eingeführt bis der eine Tragarm 14 an einem Anschlag 28 im Bereich der Auslassöffnung 6 zu liegen kommt. Dabei wird die gesamte Einheit so ausgerichtet, dass die Durchstecköffnung 23 zur Durchführung eines Temperaturmessfühlers (nicht dargestellt) am Gehäuse 2 mit der Durchstecköffnung 24 an dem einen Tragarm 14 fluchtet. Wird nun ein Temperaturmessfühler in die Durchstecköffnungen 23, 24 eingeführt, wird die gesamte Einheit aus Tragarmen 14 und Messrohr 7 in ihrer Position gesichert. Dabei kann der Temperaturmessfühler den Tragarm 14, durch dessen Durchstecköffnung 24 er geführt ist, spielfrei gegen den Anschlag 28 pressen.

Über die an den Tragarmen 14 vorgesehenen Federelemente 18, die als Leitflächen 20 ausgebildet sind, wird sichergestellt, dass die Umlenkspiegel 12 auch bei hohen Strömungsgeschwindigkeiten ihre Position beibehalten. Messungenauigkeiten können so vermieden werden.

An der Außenseite des Messrohres 7 ist zwischen den Anschlägen 25 ein Dichtungsring 29 vorgesehen. Der Dichtungsring 29 liegt sowohl am Messrohr 7 wie auch an der Gehäuseinnenwand 4 an. Dadurch wird sichergestellt, dass die gesamte Strömung durch das Messrohr 7 entlang der Messtrecke 9 fliest.

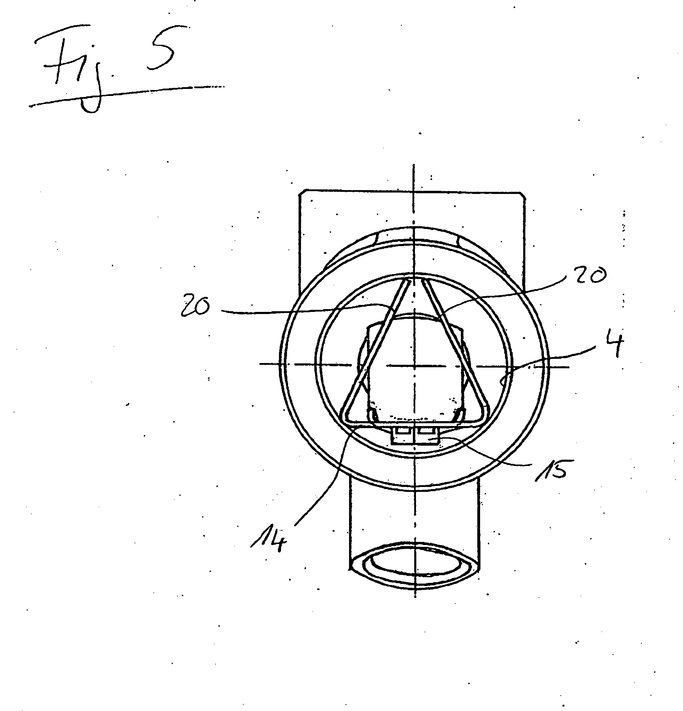

In Figur 5 in eine Seitenansicht der Durchflussmengenmesseinrichtung aus Figur 4 wiedergegeben. Das Federelement 18 bzw. dessen Federschenkel 20 bildet mit dem Tragarm 14 die Form eines Dreiecks. Der Tragarm 14 liegt dabei nicht vollständig an der Gehäuseinnenwand 4 an. Vielmehr ist der Tragarm 14 in Teilen von der Gehäuseinnenwand 4 beabstandet. Dadurch ist es möglich, den Umlenkspiegel 12 - wie auch beim ersten Ausführungsbeispiel - über einen Zapfen 15 am Tragarm 14 zu befestigen, ohne dass jedoch besondere Vorkehrungen an dem Gehäuse 2 getroffen werden müssten. So muss für den Zapfen 15 keine Vertiefung in der Gehäuseinnenwand 4 vorgesehen sein, wodurch sich der Herstellungsaufwand für das Gehäuse 2 verringert. Außerdem muss der Tragarm 14 bei der Montage weder verformt noch verkippt werden.

## Patentansprüche

1. Durchflussmengenmesseinrichtung (1) für fluide Medien mit einem Gehäuse (2), dessen Innenraum (3) durch eine Gehäuseinnenwand (4) begrenzt ist, einem innerhalb des Gehäuses (2) angeordneten Messrohrs (7), das eine Messstrecke (9) für eine Laufzeitmessung bestimmt, und einer Ultraschallmesseinrichtung umfassend mindestens einen Ultraschallwandler (10) zur Abstrahlung von Ultraschallwellen in den Innenraum (3), und mindestens einen Umlenkspiegel (12), mittels der die Ultraschallwellen des Ultraschallwandlers (10) .in die Messstrecke umgelenkt werden, wobei der Umlenkspiegel (12) an einem Tragarm (14) befestigt und der Tragarm (14) an seinem Einsteckende (17) zum Einstecken in einen Zwischenraum zwischen dem Messrohr (7) und der Gehäuseinnenwand (4) ausgebildet ist,
**dadurch gekennzeichnet, dass**
der Tragarm (14) an seinem dem Einsteckende (17) entgegengesetzten Ende ein elastisches Federelement (18) zur lösbaren Fixierung des Tragarms (14) an der Gehäuseinnenwand (4) aufweist, wobei der Umlenkspiegel (12) zwischen Einsteckende (17) und Federelement (18) angeordnet ist und sich das Federelement (18) an dem, dem Tragarm gegenüberliegenden Teil der Gehäuseinnenwand (4) abstützt und das Federelement (18) Leitflächen zur Strömungsgleichrichtung aufweist.

2. Vorrichtung nach Anspruch 1, **dadurch gekennzeichnet, dass** das Federelement (18) wenigstens einen flächigen Federschenkel (20) aufweist, der an dem Tragarm (14) befestigt ist, wobei die Flächennormale des Federschenkels (20) vorzugsweise im Wesentlichen senkrecht zur Achse des Messrohrs steht.

3. Vorrichtung nach Anspruch 2, **dadurch gekennzeichnet, dass** das Federelement (18) zwei flächige Federschenkel (20) aufweist, die vorzugsweise an den Längskanten des Tragarms (14) befestigt sind, wobei die zwei flächigen Federschenkel (20) die Form eines in seiner Mitte auseinander gezogenen X-förmigen Profils oder die beiden flächigen Federschenkel (20) zusammen mit dem Tragarm (14) die Form eines Dreiecks bilden.

4. Vorrichtung nach einem der Ansprüche 1, 2 oder 3, **dadurch gekennzeichnet, dass** der Tragarm (14) und/oder die Federschenkel (20) aus federelastischem Material gefertigt sind, wobei vorzugsweise Tragarm (14) und die Federschenkel (20) einstückig ausgeführt sind.

5. Vorrichtung nach einem der vorhergehenden Ansprüche, **dadurch gekennzeichnet, dass** auf der der Gehäuseinnenwand (4) zugewandten Seite des Tragarms (14) ein Zapfen (15) vorgesehen ist, der in eine in der Gehäuseinnenwand (4) vorgesehene Vertiefung (19) eingreift.

6. Vorrichtung nach Anspruch 5, **dadurch gekennzeichnet, dass** der Zapfen (15) einstückig mit dem Umlenkspiegel (12) ausgeführt ist und am Tragarm (14) eine selbstsichernde Durchstecköffnung (16) zur Aufnahme des Zapfens (15) vorgesehen ist.

7. Vorrichtung nach einem der vorhergehenden Ansprüche, **dadurch gekennzeichnet, dass** am Gehäuse (2) und an wenigstens einem Tragarm (14) jeweils eine Durchstecköffnung (23, 24) für einen Temperaturmessfühler vorgesehen ist, wobei die Durchstecköffnungen (23, 24) bei ordnungsgemäßer Positionierung des Tragarms (14) im Gehäuse (2) fluchten.

8. Vorrichtung nach Anspruch 7, **dadurch gekennzeichnet, dass** die Durchstecköffnungen (23, 24) zur passgenauen Aufnahme des Temperaturmessfühlers ausgebildet sind.

9. Vorrichtung nach einem der vorhergehenden Ansprüche, **dadurch gekennzeichnet, dass** an der Gehäuseinnenwand (4) ein Anschlag (28) für einen Tragarm (14) vorgesehen ist.

## Claims

1. Flow rate measuring apparatus (1) for fluid media, with a housing (2), the interior space (3) of which is bounded by an inner housing wall (4), with a measuring tube (7), which is arranged within the housing (2) and determines a measuring zone (9) for a transit time measurement, and with an ultrasonic measuring apparatus comprising at least one ultrasonic transducer (10), for emitting ultrasonic waves into the interior space (3), and at least one deflecting mirror (12), by means of which the ultrasonic waves of the ultrasonic transducer (10) are deflected into the measuring zone, the deflecting mirror (12) being fastened to a carrying arm (14) and the carrying arm (14) being formed at its insertion end (17) for insertion into an intermediate space between the measuring tube (7) and the inner housing wall (4),
**characterized in that**
the carrying arm (14) has at its end opposite from the insertion end (17) an elastic spring element (18) for the detachable fixing of the carrying arm (14) to the inner housing wall (4), the deflecting mirror (12) being arranged between the insertion end (17) and the spring element (18) and the spring element (18) being supported on the part of the inner housing wall (4) that is opposite from the carrying arm, and the spring element (18) having deflecting surfaces for rectifying the flow.

2. Apparatus according to Claim 1, **characterized in that** the spring element (18) has at least one laminar spring leg (20), which is fastened to the carrying arm (14), the normal to the surface of the spring leg (20) preferably being substantially perpendicular to the axis of the measuring tube.

3. Apparatus according to Claim 2, **characterized in that** the spring element (18) has two laminar spring legs (20), which are preferably fastened to the longitudinal edges of the carrying arm (14), the two laminar spring legs (20) creating the form of an X-shaped profile that is elongated in the middle or the two laminar spring legs (20) together with the carrying arm (14) creating the form of a triangle.

4. Apparatus according to one of Claims 1, 2 or 3, **characterized in that** the carrying arm (14) and/or the spring legs (20) are produced from spring-elastic material, the carrying arm (14) and the spring legs (20) preferably being made in one piece.

5. Apparatus according to one of the preceding claims, **characterized in that** a peg (15) is provided on the side of the carrying arm (14) that is facing the inner housing wall (4) and engages in a depression (19) provided in the inner housing wall (4).

6. Apparatus according to Claim 5, **characterized in that** the peg (15) is made in one piece with the deflecting mirror (12) and a self-locking through-opening (16) for receiving the peg (15) is provided on the carrying arm (14).

7. Apparatus according to one of the preceding claims, **characterized in that** a through-opening (23, 24) for a temperature measuring sensor is provided respectively on the housing (2) and on at least one carrying arm (14), the through-openings (23, 24) being in line when the carrying arm (14) is properly positioned in the housing (2).

8. Apparatus according to Claim 7, **characterized in that** the through-openings (23, 24) are formed for receiving the temperature measuring sensor with an exact fit.

9. Apparatus according to one of the preceding claims, **characterized in that** a stop (28) for a carrying arm (14) is provided on the inner housing wall (4).

## Revendications

1. Dispositif de mesure de quantité de débit (1) pour milieux fluides, comprenant un boîtier (2) dont l'espace intérieur (3) est délimité par une paroi intérieure de boîtier (4), un tube de mesure (7) disposé à l'intérieur du boîtier (2), lequel tube de mesure définit une zone de mesure (9) pour une mesure du temps de transit, et un dispositif de mesure par ultrasons comportant au moins un transducteur ultrasonique (10) pour l'émission d'ondes ultrasonores dans l'espace intérieur (3), et au moins un miroir de déviation (12), au moyen duquel les ondes ultrasonores du transducteur ultrasonique (10) sont déviées dans la zone de mesure, le miroir de déviation (12) étant fixé à un bras de support (14) et le bras de support (14) étant réalisé à son extrémité d'insertion (17) pour l'insertion dans un espace intermédiaire entre le tube de mesure (7) et la paroi intérieure de boîtier (4),
**caractérisé en ce que**
le bras de support (14) comprend, à son extrémité opposée à l'extrémité d'insertion (17), un élément de ressort élastique (18) pour la fixation amovible du bras de support (14) à la paroi intérieure de boîtier (4), le miroir de déviation (12) étant disposé entre l'extrémité d'insertion (17) et l'élément de ressort (18), et l'élément de ressort (18) s'appuyant contre la partie de la paroi intérieure de boîtier (4) opposée au bras de support, et l'élément de ressort (18) comprenant des surfaces de guidage pour le redressement de l'écoulement.

2. Dispositif selon la revendication 1, **caractérisé en ce que** l'élément de ressort (18) comprend au moins une branche de ressort plate (20) qui est fixée au bras de support (14), la normale à la surface de la branche de ressort (20) étant de préférence essentiellement perpendiculaire à l'axe du tube de mesure.

3. Dispositif selon la revendication 2, **caractérisé en ce que** l'élément de ressort (18) comprend deux branches de ressort plates (20) qui sont de préférence fixées aux bords longitudinaux du bras de support (14), les deux branches de ressort plates (20) formant la forme d'un profil en forme de X écarté en son centre ou les deux branches de ressort plates (20) formant, conjointement avec le bras de support (14), la forme d'un triangle.

4. Dispositif selon l'une quelconque des revendications 1, 2 ou 3, **caractérisé en ce que** le bras de support (14) et/ou les branches de ressort (20) est/sont fabriqué (e) (s) à partir d'un matériau élastique, le bras de support (14) et les branches de ressort (20) étant de préférence réalisés d'une seule pièce.

5. Dispositif selon l'une quelconque des revendications précédentes, **caractérisé en ce qu'**un tenon (15) est prévu sur le côté du bras de support (14) tourné vers la paroi intérieure de boîtier (4), lequel tenon vient en prise dans un évidement (19) prévu dans la paroi intérieure de boîtier (4).

6. Dispositif selon la revendication 5, **caractérisé en ce que** le tenon (15) est réalisé d'une seule pièce avec le miroir de déviation (12) et une ouverture traversante (16) autobloquante pour recevoir le tenon (15) est prévue sur le bras de support (14).

7. Dispositif selon l'une quelconque des revendications précédentes, **caractérisé en ce qu'**une ouverture traversante (23, 24) pour un capteur de température est prévue à chaque fois sur le boîtier (2) et sur au moins un bras de support (14), les ouvertures traversantes (23, 24) étant alignées lorsque le bras de support (14) est positionné correctement dans le boîtier (2).

8. Dispositif selon la revendication 7, **caractérisé en ce que** les ouvertures traversantes (23, 24) sont réalisées pour recevoir précisément le capteur de température.

9. Dispositif selon l'une quelconque des revendications précédentes, **caractérisé en ce qu'**une butée (28) pour un bras de support (14) est prévue sur la paroi intérieure de boîtier (4).
